# NEUE EUROPÄISCHE PATENTSCHRIFT

(11) **EP 3 323 301 B2**
(45) Veröffentlichungstag und Bekanntmachung des Hinweises auf die Entscheidung über den Einspruch: **19.07.2023**
(45) Hinweis auf die Patenterteilung: 07.08.2019
(21) Anmeldenummer: 17202674.2
(22) Anmeldetag: 21.11.2017
(51) Int. Cl.: A24C 5/32, A24C 5/33, H02J 50/10

(54) **VORRICHTUNG ZUM PRÜFEN, BEARBEITEN UND/ODER FÖRDERN VON ARTIKELN DER TABAK VERARBEITENDEN INDUSTRIE**
DEVICE FOR TESTING, PROCESSING AND/OR CONVEYING ARTICLES OF THE TOBACCO PROCESSING INDUSTRY
DISPOSITIF DE CONTRÔLE, DE TRAITEMENT ET/OU DE TRANSPORT D'ARTICLES DE L'INDUSTRIE DE TRAITEMENT DU TABAC

(30) Priorität: 22.11.2016 DE 102016122465
(43) Veröffentlichungstag der Anmeldung: 23.05.2018
(73) Patentinhaber: Körber Technologies GmbH, 21033 Hamburg (DE)
(72) Erfinder: Hansen, Volker, 22453 Hamburg (DE); Gögel, Patrick, 21075 Hamburg (DE)
(74) Vertreter: Eisenführ Speiser

(56) Entgegenhaltungen:
- EP-A1- 2 793 355
- EP-A1- 2 806 437
- EP-A1- 2 904 913
- EP-A2- 3 106 043
- WO-A1-2012/130402
- WO-A1-2015/177759
- DE-A1- 2 432 292
- DE-A1- 10 349 967
- DE-A1-102011 113 336
- DE-A1-102012 204 232
- US-A- 3 056 026
- US-A- 5 646 835
- US-A- 5 754 732
- US-A1- 2005 226 380
- US-A1- 2015 228 403
- US-B1- 6 301 324

## Beschreibung

Die Erfindung betrifft eine Vorrichtung zum Prüfen, Bearbeiten und/oder Fördern von Artikeln der Tabak verarbeitenden Industrie, mit mindestens einem rotierend angetriebenen Grundkörper, an oder in dem mindestens ein elektrischer Verbraucher angeordnet ist, und einer mit dem elektrischen Verbraucher gekoppelten Übertragungseinrichtung, die eine Drehübertragungseinheit mit einem ortsfesten Primärteil und einem mit dem Grundkörper verbundenen Sekundärteil aufweist, wobei die Drehübertragungseinheit erste Energieübertragungsmittel zur Energieversorgung des elektrischen Verbrauchers und Datensignalübertragungsmittel zur Übertragung von Signalen zu oder von dem elektrischen Verbraucher enthält.

Als elektrische Verbraucher kommen insbesondere Elektromotoren zum Einsatz, die unabhängig von einer den Grundkörper rotierend antreibenden Antriebseinheit und bevorzugt auch unabhängig voneinander arbeiten und am Grundkörper beweglich angeordnete Komponenten antreiben. Der Vorteil einer solchen Lösung gegenüber einer mechanischen Getriebeanordnung besteht insbesondere in einem geringeren Verschleiß und somit in einem reduzierten Wartungsaufwand. Ein weiterer wichtiger Vorteil gegenüber einer mechanischen Getriebeanordnung liegt in einer einfachen getrennten Ansteuerbarkeit der Elektromotoren und somit der von ihnen angetriebenen Komponenten, wodurch sich beispielsweise auf insoweit konstruktiv einfache Weise ein deutlich flexiblerer Betrieb der gesamten Vorrichtung oder Anlage erzielen lässt.

Als Beispiel sei eine Wendevorrichtung zum Wenden von Zigaretten genannt, wie sie in einer Filteransetzmaschine verwendet wird. Bei bekannten Zigarettenproduktionsmaschinen ist die Drehung jeder zweiten Zigarette notwendig, damit die Zigaretten gleich ausgerichtet verpackt werden können, so dass die Mundstücke alle jeweils zur Öffnung einer Zigarettenschachtel orientiert sind. Dazu weist die Wendevorrichtung als rotierend angetriebenen Grundkörper eine Trommel auf, auf der zur Drehung der Zigaretten Wendesegmente in Form von Drehtellern vorgesehen sind, die unabhängig von der Trommel und unabhängig voneinander durch Elektromotoren angetrieben werden.

Es ist eine Aufgabe der Erfindung eine Lösung vorzuschlagen, die eine einfache Einbindbarkeit in eine bestehende Maschinenautomatisierung gestattet und ein schnelles Anfahren der elektrischen Verbraucher und somit letztendlich der gesamten Vorrichtung und Anlage ermöglicht.

Gelöst wird diese Aufgabe gemäß einem ersten Aspekt der vorliegenden Erfindung mit einer Vorrichtung nach Anspruch 1 und gemäß einem zweiten Aspekt der vorliegenden Erfindung mit einer Vorrichtung nach Anspruch 10.

Zwar werden die Leistung und die Daten gemeinsam über die Drehübertragungseinheit übertragen; jedoch sind im Übrigen die Leistungs- und Datensignalstrecken im Wesentlichen voneinander getrennt. Es wurde gefunden, dass mit einer solchen Lösung ein schnelles Anfahren der elektrischen Verbraucher und somit letztendlich der gesamten Vorrichtung oder Anlage ermöglicht wird, indem trotz Unterbrechung des Betriebes durch Abschalten der Leistungsstrecke und somit der elektrischen Verbraucher die Datensignalstrecke weiterhin aktiv bleibt. Denn es hat sich herausgestellt, dass im Falle einer gleichzeitigen Abschaltung und somit Unterbrechung der Datensignalstrecke bei Wiederanschaltung und Reaktivierung der Datensignalstrecke das Hochfahren der Signaldatenübertragung und -verarbeitung eine gewisse Zeit in Anspruch nimmt, was sich negativ auf das Anfahrverhalten und die Betriebsbereitschaft der gesamten Vorrichtung oder Anlage auswirken kann.

Durch die Verwendung von zweiten Energieübertragungsmitteln lässt sich eine von den übrigen Übertragungsstrecken unabhängige und dadurch besonders zuverlässige Versorgung der Datensignalverarbeitungseinrichtung und deren Komponenten mit der für sie benötigten Energie realisieren, die in Abgrenzung zur Versorgung der elektrischen Verbraucher mit verhältnismäßig hoher Energie auch als Hilfsenergie bezeichnet werden kann. Somit wird auf besonders zuverlässige Weise gewährleistet, dass auch bei Abschalten der elektrischen Verbraucher durch Unterbrechung der ersten Energieübertragungsmittel die Datensignalverarbeitungseinrichtung weiterhin sicher mit Energie versorgt wird. Dadurch bleibt weiterhin die Datensignalverarbeitungseinrichtung einsatzbereit und muss bei Anschalten der elektrischen Verbraucher durch Reaktivierung der ersten Energieübertragungsmittel nicht neu anlaufen, wodurch die gesamte Vorrichtung oder Anlage sich wesentlich zügiger hochfahren lässt und somit deutlich schneller einsatzbereit ist.

Demnach enthält erfindungsgemäß die Drehübertragungseinheit drei Strecken, nämlich eine erste Leistungsstrecke zur Übertragung der Energie zur Versorgung der elektrischen Verbraucher, eine zweite Leistungsstrecke zur Übertragung der Hilfsenergie für die Datensignalverarbeitungseinrichtung und eine Datensignalstrecke.

Bevorzugte Ausführungen und Weiterbildungen der Erfindung sind in den abhängigen Ansprüchen angegeben.

Eine bevorzugte Ausführung der Erfindung zeichnet sich dadurch aus, dass die Übertragungseinrichtung eine ortsfeste erste Schnittstelleneinheit und eine am oder im Grundkörper angeordnete zweite Schnittstelleneinheit aufweist, die erste Schnittstelleneinheit zur zusätzlichen Einspeisung einer zweiten elektrischen Versorgungsspannung für die getrennte Energieversorgung der Datensignalverarbeitungseinrichtung und die zweite Schnittstelleneinheit zur Weiterleitung der über die zweiten Energieübertragungsmittel erhaltenen Energie an die Datensignalverarbeitungseinrichtung ausgebildet ist, die erste Schnittstelleneinheit über eine elektrische Leitung an das Primärteil der Drehübertragungseinheit angeschlossen und zur Einspeisung einer ersten elektrischen Versorgungsspannung für die Energieversorgung des elektrischen Verbrauchers in die ersten Energieübertragungsmittel und die zweite Schnittstelleneinheit zur Weiterleitung der von den ersten Energieübertragungsmitteln erhaltenen Energie zu dem mindestens einen elektrischen Verbraucher ausgebildet ist, die erste Schnittstelleneinheit Modulationsmittel, die die von der ersten Schnittstelleneinheit empfangenen, ein bestimmtes Datenformat aufweisenden Daten in für die Übertragung über die Drehübertragungseinheit geeignete proprietäre Signale konvertieren, und/oder Demodulationsmittel aufweist, die von der Drehübertragungseinheit erhaltenen proprietären Signale in das bestimmte Datenformat aufweisende Daten zurückwandeln, und die zweite Schnittstelleneinheit Modulationsmittel, die die von der zweiten Schnittstelleneinheit empfangenen, das bestimmte Datenformat aufweisenden Datensignale in für die Übertragung über die Drehübertragungseinheit geeignete proprietäre Signale konvertieren, und/oder Demodulationsmittel aufweist, die von der Drehübertragungseinheit erhaltenen proprietären Signale in das bestimmte Datenformat aufweisende Datensignale zurückwandeln.

Ein besonderes Charakteristikum dieser bevorzugten Ausbildung besteht darin, dass wesentliche Funktionen, die bislang in einer herkömmlichen Drehübertragungseinheit implementiert sind, aus der Drehübertragungseinheit in eine ortsfeste erste Schnittstelleneinheit und eine im oder am Grundkörper angeordnete zweite Schnittstelleneinheit ausgelagert sind. Im Zusammenhang mit der Auslagerung der Funktionen kann bevorzugt eine Hybridleitung vorgesehen werden, in der die Leistungs- und Datensignalstrecken im Form von Leistungs- und Datensignalleitungen kombiniert geführt sind, womit erreicht wird, dass die beiden Schnittstelleneinheiten und die Drehübertragungseinheit nur über ein einzelnes Kabel miteinander verbunden werden können. Die Auslagerung von Funktionen aus der Drehübertragungseinheit in die Schnittstelleneinheiten führt zu einer deutlichen Reduzierung der Bauform der Drehübertragungseinheit, was für den Einsatz in einer Vorrichtung zum Prüfen, Bearbeiten und/oder Fördern von Artikeln der Tabak verarbeitenden Industrie ein erheblicher Vorteil ist, da dort der Bauraum insbesondere an den Stellen, wo die Drehübertragungseinheit angeordnet werden müsste, recht knapp ist. Durch die Konvertierung der ein verwendetes bestimmtes Datenformat aufweisenden Daten in für die Übertragung über die Drehübertragungseinheit geeignete proprietäre Signale lassen sich die Daten auf einfache und zuverlässige Weise ohne durch das verwendete bestimmte Datenformat vorgegebene Zwänge übertragen.

Da das System aus Drehübertragungseinheit und den beiden Schnittstelleneinheiten nach außen wie eine herkömmliche Drehübertragungseinheit erscheint, ermöglicht diese bevorzugte Ausführung der Erfindung des Weiteren eine einfache Einbindbarkeit in eine bestehende Maschinenautomatisierung.

Der zuletzt genannte Vorteil wirkt sich insbesondere dann besonders positiv aus, wenn am oder im Grundkörper eine an die Datensignalübertragungsmittel angeschlossene und mit dem mindestens einen elektrischen Verbraucher gekoppelte Datensignalverarbeitungseinrichtung vorgesehen ist und zur Übertragung der das bestimmte Datenformat aufweisenden Daten ein Datenbus an die erste Schnittstelleneinheit angeschlossen ist und der gleiche Datenbus die zweite Schnittstelleneinheit mit der Datensignalverarbeitungseinrichtung verbindet. Als Datenbus eignet sich bevorzugt der EtherCAT-Bus.

Eine weitere zweckmäßige Weiterbildung der zuvor angesprochenen bevorzugten Ausführung der Erfindung zeichnet sich dadurch aus, dass die erste elektrische Versorgungsspannung eine Wechselspannung ist, die erste Schnittstelleneinheit einen Gleichrichter aufweist, der die erste Versorgungsspannung in eine Gleichspannung umwandelt, die über die elektrische Leitung dem Primärteil der Drehübertragungseinheit zugeführt wird, in der ersten Schnittstelleneinheit oder im Primärteil der Drehübertragungseinheit Wechselrichtermittel zur Umwandlung der umgewandelten Gleichspannung in eine für die Übertragung auf das Sekundärteil der Drehübertragungseinheit geeignete erste Wechselspannung vorgesehen sind, und die zweite Schnittstelleneinheit Gleichrichtermittel aufweist, die die erste Wechselspannung in eine erste Ausgangsgleichspannung zur Versorgung des mindestens einen elektrischen Verbrauchers umwandelt. Durch die Verwendung von Gleichspannung zur Übertragung der benötigten elektrischen Leistung an den elektrischen Verbraucher von der ersten Schnittstelleneinheit über die Drehübertragungseinheit an die zweite Schnittstelleneinheit lassen sich die bei Wechselstromleitungen auftretenden induktiven und kapazitiven Verluste vermeiden.

Bei einer Variante der zuvor erwähnten Weiterbildung ist am oder im Grundkörper mindestens ein Leistungsstromrichter vorgesehen, der zwischen der zweiten Schnittstelleneinheit und dem mindestens einen elektrischen Verbraucher geschaltet ist. Dabei hat eine Anordnung der Leistungsstromrichter getrennt von der zweiten Schnittstelleneinheit am oder im Grundkörper bauliche Vorteile, da die einzelnen dieser Komponenten für sich genommen einen verhältnismäßig geringen Bauraum beanspruchen.

Bevorzugt. kann die zweite elektrische Versorgungsspannung eine Gleichspannung sein.

Eine besonders bevorzugte Ausführung der Erfindung zeichnet sich dadurch aus, dass die Drehübertragungseinheit als kontaktlose Drehübertragungseinheit ausgebildet ist, wobei vorzugsweise die Energieübertragungsmittel induktiv und/oder die Datensignalübertragungsmittel kapazitiv und/oder optisch arbeiten. Beispielsweise ist auch eine kombinierte kapazitiv-optische Datenübertragung denkbar, indem die Datensignalstrecke eine kapazitive Teilstrecke zur Übertragung von internen Signalen und eine optische Teilstrecke zur Übertragung von Nutzdaten aufweist.

Gemäß dem ersten Aspekt der vorliegenden Erfindung ist ferner eine Sicherheitseinrichtung vorgesehen, die in einem ersten Betriebszustand eine Berührung von kritischen und insbesondere gesundheitsgefährdenden Teilen der Vorrichtung während deren Betriebes verhindert und in einem zweiten Betriebszustand Zugriff auf diese Teile während des Stillstandes der Vorrichtung erlaubt, und ist dadurch gekennzeichnet, dass die Sicherheitseinrichtung so ausgebildet ist, dass sie in ihrem ersten Betriebszustand die Funktion der ersten und zweiten Energieübertragungsmittel und der Datensignalübertragungsmittel unbeeinflusst lässt und in ihrem zweiten Betriebszustand eine Deaktivierung oder Abschaltung der ersten Energieübertragungsmittel bewirkt, jedoch weiterhin die Funktion der zweiten Energieübertragungsmittel und der Datensignalübertragungsmittel unbeeinflusst lässt. Während demnach der erste Betriebszustand den sog. Normalzustand bildet, in dem die Vorrichtung ohne jegliche Unterbrechungen oder Störungen normal arbeitet, definiert der zweite Betriebszustand einen Zustand, in dem beispielsweise wegen Wartungsarbeiten oder aufgrund eines Störfalles die elektrischen Verbraucher abgeschaltet sind und somit die Vorrichtung stillsteht. Muss die Sicherheitseinrichtung eingreifen und aktiv werden, so bewirkt sie erfindungsgemäß nur die Abschaltung der ersten Energieübertragungsmittel, wodurch nur die elektrischen Verbraucher abgeschaltet werden und somit dann die als berührungsgefährlich einzustufende elektrische Energie nicht mehr zur Verfügung steht. Demgegenüber lässt die erfindungsgemäße Sicherheitseinrichtung die Funktion der zweiten Energieübertragungsmittel und der Datensignalübertragungsmittel unbeeinflusst, so dass auch im Unterbrechungs- oder Störungsfalle die Datensignalverarbeitungseinrichtung weiterhin aktiv und erreichbar und somit eine schnelle Einsatzbereitschaft der gesamten Vorrichtung gewährleistet bleibt.

Bei einer Weiterbildung der zuvor erwähnten Ausführung weist die Sicherheitseinrichtung mindestens eine Abdeckung, die im ersten Betriebszustand geschlossen und im zweiten Betriebszustand geöffnet ist, und eine Überwachungseinheit auf, die bei Öffnen der Abdeckung die ersten Übertragungsmittel abschaltet oder zumindest deaktiviert. Dabei kann die Überwachungseinheit einen auf das Öffnen der Abdeckung ansprechenden Sensor und ein Sicherheitsrelais aufweisen.

Bevorzugt kann die Sicherheitseinrichtung auch so ausgebildet sein, dass sie in ihrem zweiten Betriebszustand eine Abschaltung der ersten elektrischen Versorgungsspannung vor Einspeisung in die erste Schnittstelleneinheit bewirkt und somit an einer Stelle der Energiezufuhr bereits vor der ersten Schnittstelleneinheit eingreift.

Eine weitere bevorzugte Ausführung der Erfindung, bei der eine Kühlungseinrichtung zur Kühlung von zumindest einigen Teilen der Vorrichtung vorgesehen ist, zeichnet sich dadurch aus, dass die Drehübertragungseinheit im Wirkbereich der Kühlungseinrichtung angeordnet ist. Somit wird erfindungsgemäß auf einfache und zugleich geschickte Weise die Kühlungseinrichtung mehrfach genutzt, nämlich zum einen zur Kühlung von Komponenten der Vorrichtung und zum anderen auch zur Abfuhr von in der Drehübertragungseinheit entstandener Wärme, was sich positiv auf die Leistung, die Zuverlässigkeit und die Lebensdauer der Drehübertragungseinheit auswirkt. Sofern die Vorrichtung mit einer Unterdruckversorgungseinrichtung zur Erzeugung von Unterdruck an bestimmten Teilen oder Aggregaten der Vorrichtung, wie beispielsweise in den Mulden von Muldentrommeln zur Fixierung der stabförmigen Rauchartikel, versehen ist, kann bevorzugt eine solche Unterdruckversorgungseinrichtung auch die Funktion der Kühlungseinrichtung übernehmen, wobei vorzugsweise die Drehübertragungseinheit zumindest teilweise in einem von einer solchen Unterdruckversorgungseinrichtung erzeugten Luftstrom anzuordnen ist.

Nachfolgend wird ein bevorzugtes Ausführungsbeispiel der Erfindung anhand der beiliegenden Zeichnungen näher erläutert. Es zeigen:
- Fig. 1: in perspektivischer Ansicht eine Vorrichtung zum Prüfen, Bearbeiten und/oder Fördern von Artikeln der Tabak verarbeitenden Industrie gemäß einem bevorzugten Ausführungsbeispiel;
- Fig. 2: die Vorrichtung von Fig. 1 in einem Längsschnitt;
- Fig. 3: eine aus der Ansicht von Fig. 1 herausgelöste Einzeldarstellung einer Übertragungseinrichtung gemäß einem bevorzugten Ausführungsbeispiel der Erfindung;
- Fig. 4: in einer vereinfachten schematischen Darstellung die Implementierung der Übertragungseinrichtung von Fig. 3 in die Vorrichtung gemäß den Figuren 1 und 2; und
- Fig. 5: eine schematische blockschaltbildähnliche Funktionsdarstellung der Übertragungseinrichtung

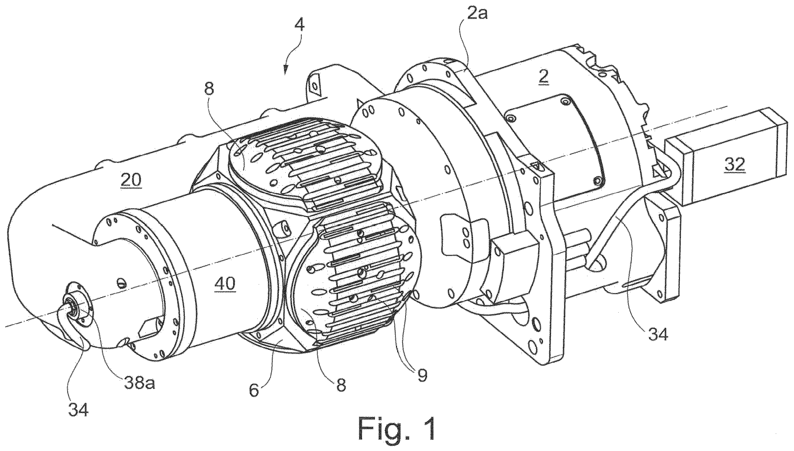

In den Figuren 1, 2 und 4 ist schematisch ein bevorzugtes Ausführungsbeispiel einer erfindungsgemäßen Vorrichtung zum Prüfen, Bearbeiten und/oder Fördern von Artikeln der Tabak verarbeitenden Industrie dargestellt. Die Vorrichtung weist ein Gehäuse 2 mit einem Montageflansch 2a auf, an dem eine Trommel drehbar gelagert ist, die im dargestellten Ausführungsbeispiel als Wendetrommel 4 ausgebildet ist. Demnach weist die Wendetrommel 4 einen rotierenden Grundkörper 6 auf, an dem über seinen Umfang verteilt Drehteller 8 angeordnet sind. Im dargestellten Ausführungsbeispiel sind vier Drehteller 8 vorgesehen. Die Drehteller 8 sind am Grundkörper 6 um eine in den Figuren nicht gezeigte Drehachse drehbar gelagert, die in Bezug auf die ebenfalls in den Figuren nicht dargestellte Rotationsachse des Grundkörpers 6 radial orientiert ist. Wie Fig. 1 erkennen lässt, sind die Drehteller 8 an ihrer Oberfläche mit mehreren parallelen nebeneinanderliegenden Mulden 9 zur Aufnahme von Zigaretten versehen. Der Grundkörper 6 kann alternativ auch Teil einer Schiebetrommel, Spreiztrommel oder rotierenden Schneideinrichtung oder eines Prüfkarussels oder Messerträgers sein.

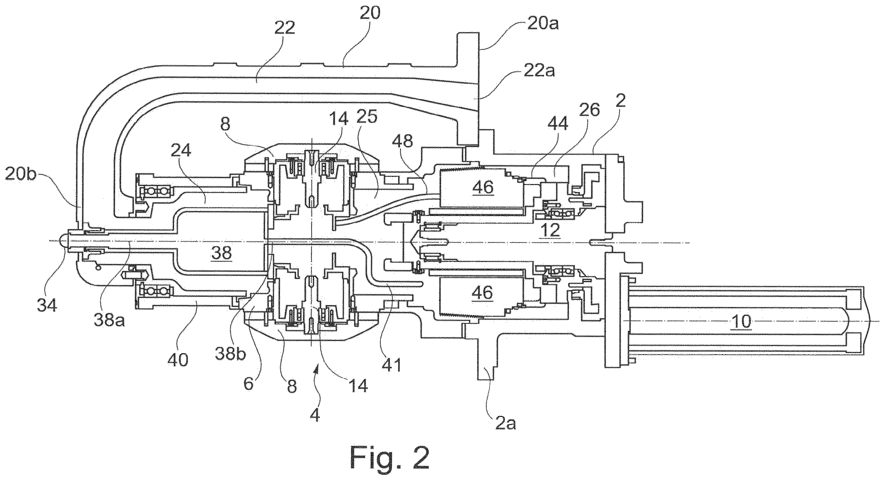

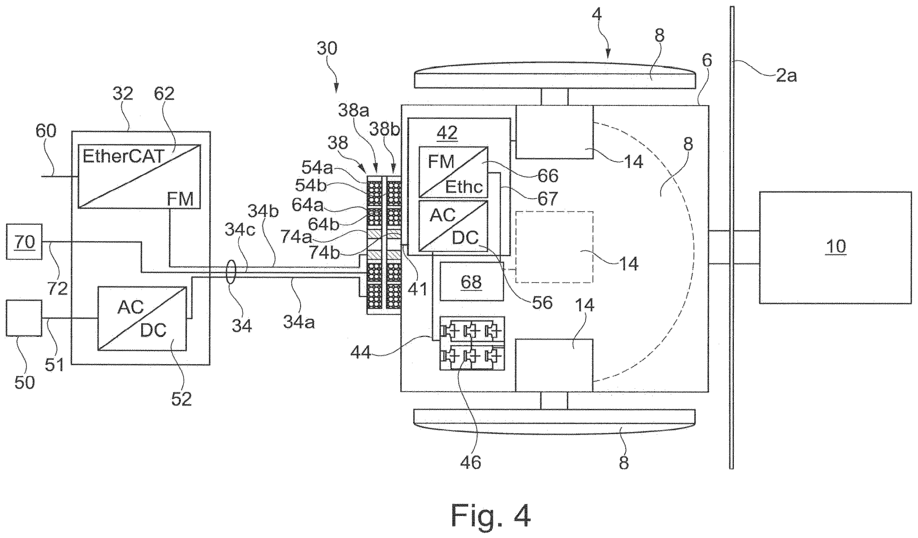

Rotierend angetrieben wird der Grundkörper 6 von einem am Gehäuse 2 angeordneten Elektromotor 10 über ein innerhalb des Gehäuses 2 vorgesehenes Getriebe 12. Die Drehteller 8 werden demgegenüber von eigenen Elektromotoren 14 rotierend angetrieben, die innerhalb des Grundkörpers 6 angeordnet sind, wie die Figuren 2 und 4 erkennen lassen. Die die Drehteller 8 in Rotation versetzenden Elektromotoren 14 innerhalb des Grundkörpers 6 arbeiten grundsätzlich unabhängig voneinander sowie ebenfalls unabhängig von dem den rotierenden Grundkörper 6 antreibenden Elektromotor 10. Die Elektromotoren 14 werden mit Energie und Steuersignalen über eine Übertragungseinrichtung versorgt, die in einer bevorzugten Ausführung gemäß der Erfindung vorgesehen und nachfolgend näher erläutert wird, wobei bereits an dieser Stelle der guten Vollständigkeit halber darauf hingewiesen wird, dass diese Übertragungseinrichtung grundsätzlich geeignet ist, auch zur Versorgung anderer am oder im Grundkörper 6 vorzusehender elektrischer Verbraucher verwendet zu werden.

Wie ferner die Figuren 1 und 2 erkennen lassen, ist ein außenliegendes gebogenes Saugrohr 20 vorgesehen, das ein flanschartiges Ende 20a aufweist. An diesem flanschartigen Ende 20a des Saugrohres 20 lässt sich eine in den Figuren nicht dargestellte Saugeinrichtung anschließen, die aus dem Inneren 22 des Saugrohres 20 Luft über dessen Auslass 22a absaugt. An dem gegenüberliegenden stromaufwärts befindlichen Ende 20b ist das Saugrohr 20 mit seinen Inneren 22 über einen ersten Hohlraum 24 mit in den Mulden 9 der Drehteller 8 ausgebildeten, in den Figuren nicht dargestellten Saugöffnungen verbunden. Somit dient das Saugrohr 20 und die daran anzuschließende Saugeinrichtung zur Erzeugung eines Unterdruckes in den Mulden 9 der Drehteller 8, um stabförmige Rauchartikel wie beispielsweise Tabakstöcke oder fertige Zigaretten anzusaugen und in den Mulden 9 zu fixieren. Wie in Fig. 2 schematisch angedeutet ist, kommuniziert der erste Hohlraum 24 mit einem in Bezug auf die Wendetrommel 4 stromaufwärts gelegenen zweiten Hohlraum 25 und dieser wiederum mit einem innerhalb des Gehäuses 2 ausgebildeten dritten Hohlraum 26. Die Ausbildung der mit dem Saugrohr 20 gekoppelten Anordnung der miteinander kommunizierenden Hohlräume 24, 25, 26 dient des Weiteren zur Kühlung von in unmittelbarer Nachbarschaft oder zumindest in der Nähe befindlichen Komponenten, um die dort entstandene Wärme mittels Luftstrom abzuführen. Damit zumindest in den zweiten und dritten Hohlräumen 25, 26 ein ausreichender Luftstrom zur Kühlung entsteht, kommuniziert der stromaufwärts gelegene dritte Hohlraum 26 über eine Einlassöffnung mit der Umgebung, die im Gehäuse 2 ausgebildet, jedoch in den Figuren nicht dargestellt ist. Somit dient die Anordnung aus Saugrohr 20 und daran anzuschließender Saugeinrichtung ferner als Kühleinrichtung zumindest für diejenigen Komponenten, die benachbart zu den Hohlräumen 24 bis 26 liegen und an denen somit der Luftstrom entlang fließt.

Wie bereits zuvor kurz angesprochen, ist zur Energieversorgung und Ansteuerung der Elektromotoren 14 eine geeignete Übertragungseinrichtung vorzusehen. Wegen der Besonderheit, dass die zu versorgenden Elektromotoren 14 innerhalb des rotierenden Grundkörpers 6 angeordnet sind, ist die Übertragungseinrichtung entsprechend auszubilden, die Energie- und Signaldatenübertragung von einer stationären Umgebung in eine rotierende Umgebung, nämlich auf den rotierenden Grundkörper 6 zu übertragen.

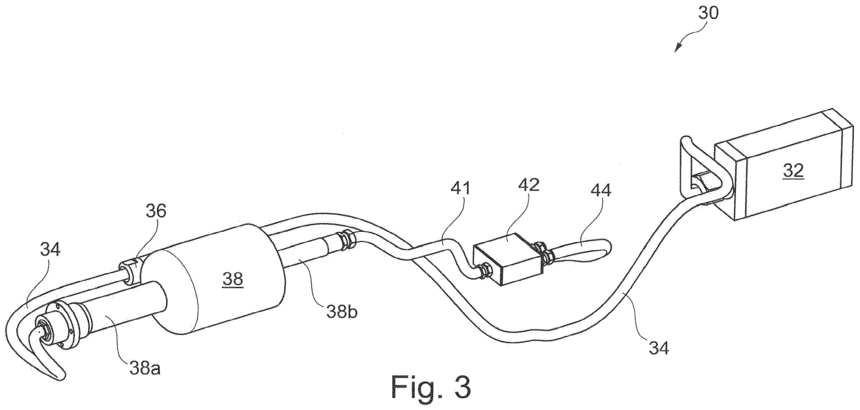

In Fig. 3 ist eine solche Übertragungseinrichtung 30 gemäß einer bevorzugten Ausführungsform der Erfindung gezeigt. Dabei sind in der Abbildung von Fig. 3 die einzelnen Komponenten in einer Relativpositionierung zueinander dargestellt, wie sie auch beim Einbau in die Vorrichtung von Fig. 1 gegeben ist, wozu die Figuren 1 und 3 hinsichtlich ihrer Perspektive übereinstimmen.

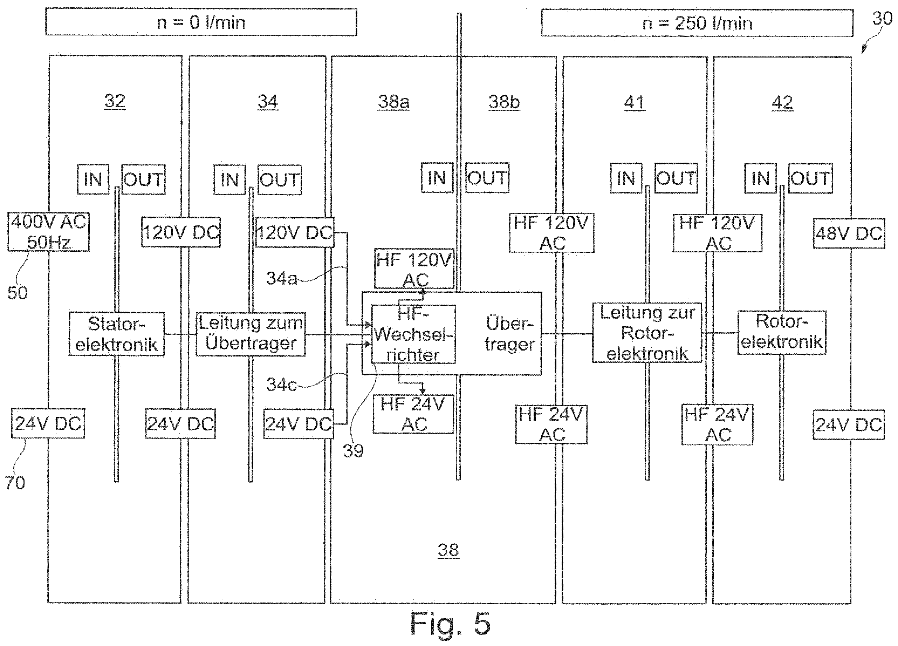

Wie Fig. 3, im Übrigen auch ergänzend in Verbindung mit den Figuren 4 und 5, erkennen lässt, weist die dargestellte Übertragungseinrichtung 30 eine stationäre erste Schnittstelleneinheit 32 auf, die wie insbesondere die Figuren 1 und 2 erkennen lassen, außerhalb des Gehäuses 2 stationär angeordnet ist und deshalb auch als sog. "Statorbox" bezeichnet werden kann. Von der ersten Schnittstelleneinheit 32 führt ein Hybridkabel 34 über eine Hybridsteckverbindung 36 zu einem stationären Primärteil 38a eines kontaktlosen Drehübertragers 38, der ebenfalls Bestandteil der Übertragungseinrichtung 30 ist. Wie Fig. 2 in Verbindung mit Fig. 1 erkennen lässt, ist der Drehübertrager 38 innerhalb eines Zusatzgehäuses 40 angeordnet, das mit dem Gehäuse 2 im Wesentlichen starr verbunden ist. Dabei ist der stationäre Primärteil 38a des Drehübertragers 38 gegenüber dem Zusatzgehäuse 40 drehfest fixiert.

Wie die Figuren 2 und 3 ferner erkennen lassen, weist der kontaktlose Drehübertrager 38 ein rotierendes Sekundärteil 38b auf, das drehfest mit dem rotierenden Grundkörper 6 gekoppelt ist. Vom Sekundärteil 38b des Drehübertragers 38 führt ein Kabel 41 zu einer zweiten Schnittstelleneinheit 42, die im oder am rotierenden Grundkörper 6 gegenüber diesem drehfest angeordnet ist und deshalb auch als sog. "Rotorbox" bezeichnet werden kann. Von der zweiten Schnittstelleneinheit 42 führt ein Anschlusskabel 44 zu Leistungsstromrichtern 46, die innerhalb des Gehäuses 2 gegenüber dem rotierenden Grundkörper 6 drehfest angeordnet sind; hierzu können die Stromrichter 46 beispielsweise an der mit dem rotierenden Grundkörper 6 gekoppelten, in den Figuren nicht erkennbar dargestellten Ausgangswelle des Getriebes 12 oder an einem am rotierenden Grundkörper 6 montierten, ebenfalls nicht dargestellten Gerüst befestigt sein. Die somit gegenüber dem rotierenden Grundkörper 6 drehfest angeordneten Stromrichter 46 rotieren demnach synchron mit dem Grundkörper 6. Wie Fig. 2 ferner erkennen lässt, führt von den Stromrichtern 46 ein Anschlusskabel 48 zu den Elektromotoren 14, damit diese von den Stromrichtern 46 mit Energie versorgt werden.

Nachfolgend wird anhand der Figuren 4 und 5 der genauere Aufbau der Übertragungseinrichtung 30 und die Funktion von deren Komponenten beschrieben.

Von einer ortsfesten Spannungsquelle 50 wird über eine elektrische Leitung 51 zur Stromversorgung der Elektromotoren 14 elektrische Energie in die "Statorbox" bzw. die erste Schnittstelleneinheit 32 eingespeist. Als von der Spannungsquelle 50 erzeugte Spannung steht im dargestellten Ausführungsbeispiel eine Wechselspannung zur Verfügung, die bevorzugt im Bereich von 200V bis 450V liegt und insbesondere 400V beträgt, und zwar bevorzugt bei 50Hz. Die erste Schnittstelleneinheit 32 enthält einen Gleichrichter 52, der die Spannung von der Spannungsquelle 50 in eine Gleichspannung umwandelt, die über das Hybridkabel 34 dem Primärteil 38a des Drehübertragers 38 zugeführt wird. Hierzu weist das Hybridkabel 34 eine separate erste Leistungsstrecke in Form einer ersten elektrischen Leitung 34a auf, über die die Gleichspannung vom Gleichrichter 52 in der ersten Schnittstelleneinheit 32 zum Primärteil 38a des Drehübertragers 38 übertragen wird. Bevorzugt liegt diese Gleichspannung in einem Bereich von 24V bis 400V und hat insbesondere einen Wert von 120V. Wie in Fig. 5 schematisch angedeutet ist, enthält der Drehübertrager 38 einen Wechselrichter 39, der gemäß dem abgebildeten Ausführungsbeispiel im Primärteil 38a des Drehübertragers 38 untergebracht ist. Die zuvor erwähnte, innerhalb des Hybridkabels 34 geführte erste elektrische Leitung 34a ist an diesen Wechselrichter 39 angeschlossen, so dass die über die erste elektrische Leitung 34a übertragene Gleichspannung in eine für die Übertragung auf das Sekundärteil 38b des Drehübertragers 38 geeignete Wechselspannung umgewandelt wird. Bei dieser Wechselspannung handelt es sich bevorzugt um eine hochfrequente Wechselspannung von 120V. Alternativ ist es aber beispielsweise auch denkbar, den Wechselrichter 39 in der ersten Schnittstelleneinheit 32 vorzusehen, so dass in diesem Fall über die erste elektrische Leitung 34a die vom Wechselrichter erzeugte Wechselspannung übertragen wird.

Für die Übertragung dieser Wechselspannung vom Primärteil 38a auf das Sekundärteil 38b des Drehübertragers 38 ist im Drehübertrager 38 eine separate Übertragerstufe mit kontaktlos arbeitenden ersten Energieübertragungsmitteln 54a, 54b vorgesehen, von denen das eine Energieübertragungsmittel 54a im Primärteil 38a und das andere Energieübertragungsmittel 54b im Sekundärteil 38b des Drehübertragers 38 vorgesehen ist. Bevorzugt arbeiten die ersten Energieübertragungsmittel 54a, 54b induktiv. Die von den ersten Energieübertragungsmitteln 54a, 54b kontaktlos übertragene hochfrequente Wechselspannung liegt somit am Ausgang des Sekundärteils 38b des Drehübertragers innerhalb des rotierenden Grundkörpers 2 an und wird von dort über das Kabel 41 zur sog. "Rotorbox" bzw. zweiten Schnittstelleneinheit 42 übertragen. Wie in Fig. 4 schematisch dargestellt ist, enthält die zweite Schnittstelleneinheit 42 einen Gleichrichter 56, der die besagte hochfrequente Wechselspannung in Gleichspannung umwandelt, die bevorzugt einen Wert von 48V hat. Diese Gleichspannung wird über das Anschlusskabel 44 zu den Leistungsstromrichtern 46 übertragen, welche für die Energieversorgung der Elektromotoren 14 vorgesehen sind.

Des Weiteren ist eine Datensignalstrecke vorgesehen, die einen Datenbus 60 aufweist, der an die erste Schnittstelleneinheit 32 angeschlossen ist, wie Fig. 4 schematisch erkennen lässt. Über diesen Datenbus 60 werden Daten in einem vorgegebenen bestimmten Datenformat bidirektional übermittelt. Bevorzugt wird als Datenbus ein EtherCAT-Datenbus verwendet. Der Datenbus 60 ist gekoppelt mit einer ersten bidirektionalen Modulationseinrichtung 62, die zusätzlich in der ersten Schnittstelleneinheit 32 vorgesehen ist. Diese bidirektionale Modulationseinrichtung 62 dient zur Modulation und Demodulation von über die Datensignalstrecke übermittelten Signaldaten. Die vom Datenbus empfangenen Daten konvertiert die Modulationseinrichtung 62 in für die Übertragung über den Drehübertrager 38 geeignete proprietäre Signale, wobei die Modulation bevorzugt eine Frequenzmodulation ist. Diese von der Modulationseinrichtung 62 erzeugten proprietären Signale werden über eine Datensignalleitung 34b, die Teil des Hybridkabels 34 ist, wie in Fig. 4 schematisch dargestellt ist, an das Primärteil 38a des Drehübertragers 38 übermittelt. Konkret weist hierzu der Drehübertrager 38 eine weitere separate Übertragerstufe mit kontaktlos arbeitenden Datensignalübertragungsmitteln 64a, 64b auf, von denen das eine Datensignalübertragungsmittel 64a im Primärteil 38a und das andere Datensignalübertragungsmittel 64b im Sekundärteil 38b des Drehübertragers 38 vorgesehen ist. Die Datensignalleitung 34b im Hybridkabel 34 ist somit an das im Primärteil 38a des Drehübertragers 38 vorgesehene Datensignalübertragungsmittel 64a angeschlossen. Bevorzugt arbeiten die Datensignalübertragungsmittel 64a, 64b kapazitiv. Alternativ ist es auch denkbar, die Datensignalübertragungsmittel 64a, 64b und ggf. auch die Datensignalleitung 34b im Hybridkabel 34 für eine optische Übertragung der Datensignale auszubilden. Für den zuletzt genannten Fall, wenn also über die gesamte Datensignalstrecke zwischen den ersten und zweiten Schnittstelleneinheiten 32 und 42 die Übertragung der Signaldaten auf optische Weise erfolgen soll, sind die Modulationseinrichtungen 62 und 66 mit bidirektional arbeitenden Optokopplern zu versehen, die eine Umwandlung zwischen elektrischen und optischen Datensignalen vornehmen. Es ist auch eine kombinierte Anwendung von elektrischer und insbesondere kapazitiver Übertragung und optischer Übertragung denkbar, indem bevorzugt interne Signale elektrisch bzw. kapazitiv und die Nutzdaten optisch übertragen werden.

Wie in Fig. 4 des Weiteren schematisch erkennbar ist, enthält die im rotierenden Grundkörper 6 vorgesehene Schnittstelleneinheit 42 eine zweite bidirektionale Modulationseinrichtung 66, die in gleicher Weise wie die erste Modulationseinrichtung 62 in der stationären ersten Schnittstelleneinheit 32 arbeitet und an das im Sekundärteil 38b des Drehübertragers 38 vorgesehene Datensignalübertragungsmittel 64b angeschlossen ist. Die vom Drehübertrager 38 erhaltenen proprietären Signale werden von der zweiten Modulationseinrichtung 66 in Daten zurückgewandelt, die das bestimmte Datenformat in gleicher Weise wie die auf dem Datenbus 60 vor der stationären ersten Schnittstelleneinheit 32 anliegenden Daten aufweisen. Somit ist am Ausgang der zweiten Modulationseinrichtung 66 ein Datenbus 67 angeschlossen, der dem Datenbus 60 entspricht. Über diesen Datenbus 67 ist die zweite Modulationseinrichtung 66 mit einer Datensignalverarbeitungseinrichtung 68 gekoppelt, die wie die zweite Schnittstelleneinheit 42 im rotierenden Grundkörper 6 angeordnet und zur Ansteuerung der Stromrichter 46 und somit letztendlich zur Steuerung der Elektromotoren 14 vorgesehen ist.

Die Datensignalverarbeitungseinrichtung 68 arbeitet bidirektional. D.h. sie empfängt und verarbeitet nicht nur über den Datenbus 60 eintreffende Daten, die von der ersten Modulationseinrichtung 62 in der stationären ersten Schnittstelleneinheit 32 umgewandelt, über den Drehübertrager 38 übertragen und von der zweiten Modulationseinrichtung 66 in der zweiten Schnittstelleneinheit 42 wieder entsprechend zurückgewandelt werden, sondern gibt auch Daten in den Datenbus, welche beispielsweise von in den Figuren nicht abgebildeten Sensoren stammen oder das Ergebnis der Verarbeitung von Daten und Signalen von Sensoren sein können. Da auch die zweite Modulationseinrichtung 66 wie die erste Modulationseinrichtung 62 bidirektional arbeitet, werden die von der Datensignalverarbeitungseinrichtung 68 empfangenen Daten in die für die Übertragung über den Drehübertrager 38 geeignete proprietäre Signale konvertiert, die dann von der ersten Modulationseinrichtung 62 entsprechend rückgewandelt werden. Somit sind beide Modulationseinrichtungen 62, 66 in gleicher Weise sowohl zur Modulation als auch zur Demodulation vorgesehen.

Wie die Figuren 4 und 5 des Weiteren erkennen lassen, ist noch eine Hilfsspannungsquelle 70 über eine elektrische Leitung 72 an die stationäre erste Schnittstelleneinheit 32 angeschlossen. Die Hilfsenergiespannungsquelle liefert eine sog. Hilfsspannung bevorzugt als Gleichspannung im Bereich von 12V bis 96V und insbesondere mit einem Betrag von 24V. Diese Hilfsspannung dient zur Energieversorgung der im rotierenden Grundkörper 6 vorgesehenen Datensignalverarbeitungseinrichtung 68. Hierzu wird diese Hilfsspannung im dargestellten Ausführungsbeispiel unverändert von der ersten Schnittstelleneinheit 32 in eine zweite elektrische Leitung 64c eingespeist, die eine weitere Leistungsstrecke bildet und ebenfalls Teil des Hybridkabels 34 ist. Die Hilfsspannung wird im Drehübertrager 38 über eine weitere separate Übertragerstufe übertragen, die aus kontaktlos arbeitenden zweiten Energieübertragungsmitteln 74a, 74b besteht, von denen das eine Energieübertragungsmittel 74a im Primärteil 38a und das andere Energieübertragungsmittel 74b im Sekundärteil 38b des Drehübertragers 38 vorgesehen ist. Die zweiten Energieübertragungsmittel 74a, 74b arbeiten bevorzugt induktiv. Vor Übertragung vom Primärteil 38a auf das Sekundärteil 38b des Drehübertragers 38 wird die Hilfsspannung, die eine Gleichspannung ist, von dem im Drehübertrager 38 primärseitig vorgesehenen Wechselrichter 39 (Fig. 5) in eine Wechselspannung umgewandelt, die ebenfalls bevorzugt im Bereich von 12V bis 96V liegt und insbesondere 24V beträgt. Diese Wechselspannung wird dann nach Übertragung durch den Drehübertrager 38 in der im rotierenden Grundkörper 6 angeordneten zweiten Schnittstelleneinheit 42 durch einen dort zusätzlich vorgesehenen, jedoch in den Figuren nicht dargestellten Gleichrichter in eine der ursprünglichen Hilfsspannung entsprechende Gleichspannung bevorzugt wieder im Bereich von 12V bis 96V und insbesondere mit einem Wert von 24V zurückgewandelt. Mit dieser Spannung wird dann die Datensignalverarbeitungseinrichtung 68 versorgt, wozu ein in den Figuren nicht dargestelltes Anschlusskabel innerhalb des rotierenden Grundkörpers 6 von der zweiten Schnittstelleneinheit 42 zur Datensignalverarbeitungseinrichtung 68 geführt ist.

Unabhängig von der Versorgung der Elektromotoren 14 wird also die Datensignalverarbeitungseinrichtung 68 durch die Hilfsspannungsquelle 70 separat mit Energie versorgt. Da die Datensignalverarbeitungseinrichtung 68 aber nur verhältnismäßig wenig Energie benötigt, beträgt die für die Versorgung der Datensignalverarbeitungseinrichtung 68 zur Verfügung gestellte Energie nur einen Bruchteil der für die Versorgung der Elektromotoren 14 benötigten Energie. Demnach weist die Übertragungseinrichtung 30 eine erste Leistungsstrecke zur Übertragung der Energie von der Spannungsquelle 50 zu den Elektromotoren 14 für deren Versorgung, eine zweite Leistungsstrecke zur Übertragung der Hilfsenergie von der Hilfsspannungsquelle 70 an die Datensignalverarbeitungseinrichtung 68 für deren separate Versorgung und eine Datensignalstrecke zur Kopplung des stationären Datenbusses 60 mit dem im Grundkörper 6 vorgesehenen Datenbus 67 auf. Durch die Verwendung der zweiten Energieübertragungsmittel 74a, 74b wird eine von den übrigen Übertragungsstrecken unabhängige und dadurch besonders zuverlässige Versorgung der Datensignalverarbeitungseinrichtung 68 mit der für sie benötigten Energie realisiert, die in Abgrenzung zur Versorgung der Elektromotoren 14, die ja eine verhältnismäßig hohe Energie benötigt, die Hilfsenergie bildet. Somit wird auf besonders zuverlässige Weise gewährleistet, dass auch bei Abschalten der Elektromotoren 14 die Datensignalverarbeitungseinrichtung 68 weiterhin sicher mit Energie versorgt wird. Dadurch bleibt weiterhin die Datensignalverarbeitungseinrichtung 68 einsatzbereit und muss bei Einschalten der Elektromotoren 14 nicht neu anlaufen, wodurch die gesamte Vorrichtung oder Anlage sich wesentlich zügiger hochfahren lässt und somit deutlich schneller einsatzbereit ist.

Des Weiteren kann bevorzugt eine Sicherheitseinrichtung vorgesehen sein, die in einem ersten Betriebszustand eine Berührung von kritischen und insbesondere gesundheitsgefährdenden Teilen der Vorrichtung während deren Betriebes verhindert und in einem zweiten Betriebszustand Zugriff auf diese Teile während des Stillstandes der Vorrichtung erlaubt. Diese Sicherheitseinrichtung, die in den Figuren nicht dargestellt ist, ist so ausgebildet, dass sie in ihrem ersten Betriebszustand die Funktion der beiden getrennten Leistungsstrecken und der Datensignalstrecke unbeeinflusst lässt und in ihrem zweiten Betriebszustand nur eine Deaktivierung oder Abschaltung der für die Energieversorgung der Elektromotoren 14 vorgesehenen ersten Leistungsstrecke bewirkt, jedoch weiterhin die Funktion der für die Energieversorgung der Datensignalverarbeitungseinrichtung 68 vorgesehenen zweiten Leistungsstrecke und der Datensignalstrecke unbeeinflusst lässt. Während demnach der erste Betriebszustand den sog. Normalzustand bildet, in dem die Vorrichtung ohne jegliche Unterbrechungen oder Störungen normal arbeitet, definiert der zweite Betriebszustand einen Zustand, in dem beispielsweise wegen Wartungsarbeiten oder aufgrund eines Störfalles die Elektromotoren 14 abgeschaltet sind und somit die Vorrichtung stillsteht. Muss die Sicherheitseinrichtung eingreifen und aktiv werden, so bewirkt sie nur die Abschaltung der ersten Leistungsstrecke, wodurch nur die Elektromotoren 14 abgeschaltet werden und somit dann die als besonders gefährlich einzustufende elektrische Energie von der Spannungsquelle 50 nicht mehr zur Verfügung steht. Demgegenüber lässt die Sicherheitseinrichtung die Funktion der zweiten Leistungsstrecke und der Datensignalstrecke unbeeinflusst, so dass auch im Unterbrechungs- oder Störungsfalle die Datensignalverarbeitungseinrichtung 68 weiterhin aktiv und erreichbar und somit eine schnelle Einsatzbereitschaft der gesamten Vorrichtung gewährleistet bleibt.

Bevorzugt weist die Sicherheitseinrichtung mindestens eine Abdeckung, die im ersten Betriebszustand geschlossen und im zweiten Betriebszustand geöffnet ist, und eine Überwachungseinheit auf, die bei Öffnen der Abdeckung die erste Leistungsstrecke abschaltet oder zumindest deaktiviert. Dabei kann die Überwachungseinheit einen auf das Öffnen der Abdeckung ansprechenden Sensor oder ein Sicherheitsrelais aufweisen. Insbesondere kann die Sicherheitseinrichtung so ausgebildet sein, dass sie in ihrem zweiten Betriebszustand eine Abschaltung der Spannungsquelle 50 bewirkt.

Wegen des verhältnismäßig hohen Energieverbrauches der Elektromotoren 14 kann sich aufgrund der dadurch bedingten Übertragung von verhältnismäßig hoher Energie, die über die erste Leistungsstrecke und somit die im Drehübertrager 38 enthaltenen ersten Energieübertragungsmittel 54a, 54b übertragen wird, der Drehübertrager 38 erwärmen. Um die dadurch entstehende Wärme sicher abführen zu können, ist der Drehübertrager 38 innerhalb des im Zusatzgehäuse 40 ausgebildeten ersten Hohlraumes 24 angeordnet, wie Fig. 2 erkennen lässt, so dass der Drehübertrager 38 unmittelbar dem kühlenden Saugluftstrom ausgesetzt ist. Gleiches gilt auch für die Leistungsstromrichter 46, die innerhalb des dritten Hohlraumes 26 im Gehäuse 2 angeordnet sind und somit ebenfalls dem kühlenden Saugluftstrom unmittelbar ausgesetzt sind.

## Patentansprüche

1. Vorrichtung zum Prüfen, Bearbeiten und/oder Fördern von Artikeln der Tabak verarbeitenden Industrie, mit mindestens einem rotierend angetriebenen Grundkörper (6), an oder in dem mindestens ein elektrischer Verbraucher (14) angeordnet ist, und einer mit dem elektrischen Verbraucher (14) gekoppelten Übertragungseinrichtung (30), die eine Drehübertragungseinheit (38) mit einem ortsfesten Primärteil (38a) und einem mit dem Grundkörper (6) verbundenen Sekundärteil (38b) aufweist, wobei die Drehübertragungseinheit (38) erste Energieübertragungsmittel (54a, 54b) zur Energieversorgung des elektrischen Verbrauchers (14) und Datensignalübertragungsmittel (64a, 64b) zur Übertragung von Signalen zu oder von dem elektrischen Verbraucher (14) enthält,
**dadurch gekennzeichnet, dass**
am oder im Grundkörper (6) eine an die Datensignalübertragungsmittel (64a, 64b) angeschlossene und mit dem mindestens einen elektrischen Verbraucher (14) gekoppelte Datensignalverarbeitungseinrichtung (68) vorgesehen ist und die Drehübertragungseinheit (38) zweite Energieübertragungsmittel (74a, 74b) zur getrennten Energieversorgung der Datensignalverarbeitungseinrichtung (68) enthält, und
eine Sicherheitseinrichtung vorgesehen ist, die in einem ersten Betriebszustand eine Berührung von kritischen und insbesondere gesundheitsgefährdenden Teilen der Vorrichtung während deren Betriebes verhindert und in einem zweiten Betriebszustand Zugriff auf diese Teile während des Stillstandes der Vorrichtung erlaubt und so ausgebildet ist, dass sie in ihrem ersten Betriebszustand die Funktion der ersten und zweiten Energieübertragungsmittel (54a, 54b) und der Datensignalübertragungsmittel (64a, 64b) unbeeinflusst lässt und in ihrem zweiten Betriebszustand eine Deaktivierung oder Abschaltung der ersten Energieübertragungsmittel (54a, 54b) bewirkt, jedoch weiterhin die Funktion der zweiten Energieübertragungsmittel (54a, 54b) und der Datensignalübertragungsmittel (64a, 64b) unbeeinflusst lässt.

2. Vorrichtung nach Anspruch 1,
**dadurch gekennzeichnet, dass**
die Übertragungseinrichtung (30) eine ortsfeste erste Schnittstelleneinheit (32) und eine am oder im Grundkörper (6) angeordnete zweite Schnittstelleneinheit (42) aufweist,
die erste Schnittstelleneinheit (32) zur zusätzlichen Einspeisung einer zweiten elektrischen Versorgungsspannung für die getrennte Energieversorgung der Datensignalverarbeitungseinrichtung (68) und die zweite Schnittstelleneinheit (42) zur Weiterleitung der über die zweiten Energieübertragungsmittel (74a, 74b) erhaltenen Energie an die Datensignalverarbeitungseinrichtung (68) ausgebildet ist,
die erste Schnittstelleneinheit (32) über eine elektrische Leitung (34a) an das Primärteil (38a) der Drehübertragungseinheit (38) angeschlossen und zur Einspeisung einer ersten elektrischen Versorgungsspannung für die Energieversorgung des elektrischen Verbrauchers (14) in die ersten Energieübertragungsmittel (54a, 54b) und die zweite Schnittstelleneinheit (42) zur Weiterleitung der von den ersten Energieübertragungsmitteln (54a, 54b) erhaltenen Energie zu dem mindestens einen elektrischen Verbraucher (14) ausgebildet ist,
die erste Schnittstelleneinheit (32) Modulationsmittel (62), die die von der ersten Schnittstelleneinheit (32) empfangenen, ein bestimmtes Datenformat aufweisenden Daten in für die Übertragung über die Drehübertragungseinheit (38) geeignete proprietäre Signale konvertieren, und/oder Demodulationsmittel aufweist, die von der Drehübertragungseinheit (38) erhaltenen proprietären Signale in das bestimmte Datenformat aufweisende Daten zurückwandeln, und
die zweite Schnittstelleneinheit (42) Modulationsmittel, die die von der zweiten Schnittstelleneinheit (42) empfangenen, das bestimmte Datenformat aufweisenden Datensignale in für die Übertragung über die Drehübertragungseinheit (38) geeignete proprietäre Signale konvertieren, und/oder Demodulationsmittel aufweist, die von der Drehübertragungseinheit (38) erhaltenen proprietären Signale in das bestimmte Datenformat aufweisende Datensignale zurückwandeln.

3. Vorrichtung nach Anspruch 2,
**dadurch gekennzeichnet, dass** am oder im Grundkörper (6) eine an die Datensignalübertragungsmittel (64a, 64b) angeschlossene und mit dem mindestens einen elektrischen Verbraucher (14) gekoppelte Datensignalverarbeitungseinrichtung (68) vorgesehen ist und zur Übertragung der das bestimmte Datenformat aufweisenden Daten ein Datenbus an die erste Schnittstelleneinheit (32) angeschlossen ist und der gleiche Datenbus die zweite Schnittstelleneinheit (42) mit der Datensignalverarbeitungseinrichtung (68) verbindet.

4. Vorrichtung nach Anspruch 2 oder 3,
**dadurch gekennzeichnet, dass**
die erste elektrische Versorgungsspannung eine Wechselspannung ist, die erste Schnittstelleneinheit (32) einen Gleichrichter (52) aufweist, der die erste Versorgungsspannung in eine Gleichspannung umwandelt, die über die elektrische Leitung (34a) dem Primärteil (38a) der Drehübertragungseinheit (38) zugeführt wird,
in der ersten Schnittstelleneinheit (32) oder im Primärteil (38a) der Drehübertragungseinheit (38) Wechselrichtermittel (39) zur Umwandlung der umgewandelten Gleichspannung in eine für die Übertragung auf das Sekundärteil (38b) der Drehübertragungseinheit (38) geeignete erste Wechselspannung vorgesehen sind, und
die zweite Schnittstelleneinheit (42) Gleichrichtermittel (56) aufweist, die die erste Wechselspannung in eine erste Ausgangsgleichspannung zur Versorgung des mindestens einen elektrischen Verbrauchers (14) umwandelt.

5. Vorrichtung nach Anspruch 4,
**dadurch gekennzeichnet, dass** am oder im Grundkörper (6) mindestens ein Leistungsstromrichter (46) vorgesehen ist, der zwischen der zweiten Schnittstelleneinheit (42) und dem mindestens einen elektrischen Verbraucher (14) geschaltet ist und die erste Ausgangsgleichspannung in eine geeignete Spannung zur Versorgung des mindestens einen elektrischen Verbrauchers (14) umwandelt.

6. Vorrichtung nach mindestens einem der Ansprüche 2 bis 5,
**dadurch gekennzeichnet, dass** die Sicherheitseinrichtung so ausgebildet ist, dass sie in ihrem zweiten Betriebszustand eine Abschaltung der ersten elektrischen Versorgungsspannung vor Einspeisung in die erste Schnittstelleneinheit (32) bewirkt.

7. Vorrichtung nach mindestens einem der Ansprüche 2 bis 6,
**dadurch gekennzeichnet, dass** die zweite elektrische Versorgungsspannung eine Gleichspannung ist.

8. Vorrichtung nach mindestens einem der vorangegangenen Ansprüche, **dadurch gekennzeichnet, dass** die Sicherheitseinrichtung mindestens eine Abdeckung, die im ersten Betriebszustand geschlossen und im zweiten Betriebszustand geöffnet ist, und eine Überwachungseinheit aufweist, die bei Öffnen der Abdeckung die ersten Energieübertragungsmittel (54a, 54b) abschaltet oder zumindest deaktiviert.

9. Vorrichtung nach Anspruch 8,
**dadurch gekennzeichnet, dass** die Überwachungseinheit einen auf das Öffnen der Abdeckung ansprechenden Sensor und ein Sicherheitsrelais aufweist.

10. Vorrichtung zum Prüfen, Bearbeiten und/oder Fördern von Artikeln der Tabak verarbeitenden Industrie, mit mindestens einem rotierend angetriebenen Grundkörper (6), an oder in dem mindestens ein elektrischer Verbraucher (14) angeordnet ist, und einer mit dem elektrischen Verbraucher (14) gekoppelten Übertragungseinrichtung (30), die eine Drehübertragungseinheit (38) mit einem ortsfesten Primärteil (38a) und einem mit dem Grundkörper (6) verbundenen Sekundärteil (38b) aufweist, wobei die Drehübertragungseinheit (38) erste Energieübertragungsmittel (54a, 54b)zur Energieversorgung des elektrischen Verbrauchers (14) und Datensignalübertragungsmittel (64a, 64b) zur Übertragung von Signalen zu oder von dem elektrischen Verbraucher (14) enthält,
**dadurch gekennzeichnet, dass**
der Grundkörper (6) Teil einer Wendetrommel, einer Schiebetrommel, einer Spreiztrommel, einer rotierenden Schneideinrichtung, eines Prüfkarussells oder eines Messerträgers ist und am oder im Grundkörper (6) eine an die Datensignalübertragungsmittel (64a, 64b) angeschlossene und mit dem mindestens einen elektrischen Verbraucher (14) gekoppelte Datensignalverarbeitungseinrichtung (68) vorgesehen ist und die Drehübertragungseinheit (38) zweite Energieübertragungsmittel (74a, 74b) zur getrennten Energieversorgung der Datensignalverarbeitungseinrichtung (68) enthält.

11. Vorrichtung nach Anspruch 10,
**dadurch gekennzeichnet, dass**
die Übertragungseinrichtung (30) eine ortsfeste erste Schnittstelleneinheit (32) und eine am oder im Grundkörper (6) angeordnete zweite Schnittstelleneinheit (42) aufweist,
die erste Schnittstelleneinheit (32) zur zusätzlichen Einspeisung einer zweiten elektrischen Versorgungsspannung für die getrennte Energieversorgung der Datensignalverarbeitungseinrichtung (68) und die zweite Schnittstelleneinheit (42) zur Weiterleitung der über die zweiten Energieübertragungsmittel (74a, 74b) erhaltenen Energie an die Datensignalverarbeitungseinrichtung (68) ausgebildet ist,
die erste Schnittstelleneinheit (32) über eine elektrische Leitung (34a) an das Primärteil (38a) der Drehübertragungseinheit (38) angeschlossen und zur Einspeisung einer ersten elektrischen Versorgungsspannung für die Energieversorgung des elektrischen Verbrauchers (14) in die ersten Energieübertragungsmittel (54a, 54b) und die zweite Schnittstelleneinheit (42) zur Weiterleitung der von den ersten Energieübertragungsmitteln (54a, 54b) erhaltenen Energie zu dem mindestens einen elektrischen Verbraucher (14) ausgebildet ist,
die erste Schnittstelleneinheit (32) Modulationsmittel (62), die die von der ersten Schnittstelleneinheit (32) empfangenen, ein bestimmtes Datenformat aufweisenden Daten in für die Übertragung über die Drehübertragungseinheit (38) geeignete proprietäre Signale konvertieren, und/oder Demodulationsmittel aufweist, die von der Drehübertragungseinheit (38) erhaltenen proprietären Signale in das bestimmte Datenformat aufweisende Daten zurückwandeln, und
die zweite Schnittstelleneinheit (42) Modulationsmittel, die die von der zweiten Schnittstelleneinheit (42) empfangenen, das bestimmte Datenformat aufweisenden Datensignale in für die Übertragung über die Drehübertragungseinheit (38) geeignete proprietäre Signale konvertieren, und/oder Demodulationsmittel aufweist, die von der Drehübertragungseinheit (38) erhaltenen proprietären Signale in das bestimmte Datenformat aufweisende Datensignale zurückwandeln.

12. Vorrichtung nach Anspruch 11,
**dadurch gekennzeichnet, dass** am oder im Grundkörper (6) eine an die Datensignalübertragungsmittel (64a, 64b) angeschlossene und mit dem mindestens einen elektrischen Verbraucher (14) gekoppelte Datensignalverarbeitungseinrichtung (68) vorgesehen ist und zur Übertragung der das bestimmte Datenformat aufweisenden Daten ein Datenbus an die erste Schnittstelleneinheit (32) angeschlossen ist und der gleiche Datenbus die zweite Schnittstelleneinheit (42) mit der Datensignalverarbeitungseinrichtung (68) verbindet.

13. Vorrichtung nach Anspruch 11 oder 12,
**dadurch gekennzeichnet, dass**
die erste elektrische Versorgungsspannung eine Wechselspannung ist, die erste Schnittstelleneinheit (32) einen Gleichrichter (52) aufweist, der die erste Versorgungsspannung in eine Gleichspannung umwandelt, die über die elektrische Leitung (34a) dem Primärteil (38a) der Drehübertragungseinheit (38) zugeführt wird,
in der ersten Schnittstelleneinheit (32) oder im Primärteil (38a) der Drehübertragungseinheit (38) Wechselrichtermittel (39) zur Umwandlung der umgewandelten Gleichspannung in eine für die Übertragung auf das Sekundärteil (38b) der Drehübertragungseinheit (38) geeignete erste Wechselspannung vorgesehen sind, und
die zweite Schnittstelleneinheit (42) Gleichrichtermittel (56) aufweist, die die erste Wechselspannung in eine erste Ausgangsgleichspannung zur Versorgung des mindestens einen elektrischen Verbrauchers (14) umwandelt.

14. Vorrichtung nach Anspruch 13,
**dadurch gekennzeichnet, dass** am oder im Grundkörper (6) mindestens ein Leistungsstromrichter (46) vorgesehen ist, der zwischen der zweiten Schnittstelleneinheit (42) und dem mindestens einen elektrischen Verbraucher (14) geschaltet ist und die erste Ausgangsgleichspannung in eine geeignete Spannung zur Versorgung des mindestens einen elektrischen Verbrauchers (14) umwandelt.

15. Vorrichtung nach mindestens einem der Ansprüche 11 bis 14,
**dadurch gekennzeichnet, dass** die zweite elektrische Versorgungsspannung eine Gleichspannung ist.

16. Vorrichtung nach mindestens einem der Ansprüche 10 bis 15,
mit einer Sicherheitseinrichtung, die in einem ersten Betriebszustand eine Berührung von kritischen und insbesondere gesundheitsgefährdenden Teilen der Vorrichtung während deren Betriebes verhindert und in einem zweiten Betriebszustand Zugriff auf diese Teile während des Stillstandes der Vorrichtung erlaubt,
**dadurch gekennzeichnet, dass** die Sicherheitseinrichtung so ausgebildet ist, dass sie in ihrem ersten Betriebszustand die Funktion der ersten und zweiten Energieübertragungsmittel (54a, 54b) und der Datensignalübertragungsmittel (64a, 64b) unbeeinflusst lässt und in ihrem zweiten Betriebszustand eine Deaktivierung oder Abschaltung der ersten Energieübertragungsmittel (54a, 54b) bewirkt, jedoch weiterhin die Funktion der zweiten Energieübertragungsmittel (54a, 54b) und der Datensignalübertragungsmittel (64a, 64b) unbeeinflusst lässt.

17. Vorrichtung nach Anspruch 16, **dadurch gekennzeichnet, dass** die Sicherheitseinrichtung mindestens eine Abdeckung, die im ersten Betriebszustand geschlossen und im zweiten Betriebszustand geöffnet ist, und eine Überwachungseinheit aufweist, die bei Öffnen der Abdeckung die ersten Energieübertragungsmittel (54a, 54b) abschaltet oder zumindest deaktiviert.

18. Vorrichtung nach Anspruch 17,
**dadurch gekennzeichnet, dass** die Überwachungseinheit einen auf das Öffnen der Abdeckung ansprechenden Sensor und ein Sicherheitsrelais aufweist.

19. Vorrichtung nach mindestens einem der Ansprüche 10 bis 14 sowie nach mindestens einem der Ansprüche 16 bis 18,
**dadurch gekennzeichnet, dass** die Sicherheitseinrichtung so ausgebildet ist, dass sie in ihrem zweiten Betriebszustand eine Abschaltung der ersten elektrischen Versorgungsspannung vor Einspeisung in die erste Schnittstelleneinheit (32) bewirkt.

20. Vorrichtung nach mindestens einem der vorangegangenen Ansprüche,
**dadurch gekennzeichnet, dass** die Drehübertragungseinheit (38) als kontaktlose Drehübertragungseinheit ausgebildet ist.

21. Vorrichtung nach Anspruch 20,
**dadurch gekennzeichnet, dass** die Energieübertragungsmittel (54a, 54b) induktiv arbeiten.

22. Vorrichtung nach Anspruch 20 oder 21,
**dadurch gekennzeichnet, dass** die Datensignalübertragungsmittel (64a, 64b) kapazitiv und/oder optisch arbeiten.

23. Vorrichtung nach mindestens einem der vorangegangenen Ansprüche, mit einer Kühlungseinrichtung zur Kühlung von zumindest einigen Teilen der Vorrichtung,
**dadurch gekennzeichnet, dass** die Drehübertragungseinheit (38) im Wirkbereich der Kühlungseinrichtung angeordnet ist.

24. Vorrichtung nach Anspruch 23, mit einer Unterdruckversorgungseinrichtung (20, 22, 24, 25, 26) zur Erzeugung von Unterdruck an bestimmten Teilen oder Aggregaten der Vorrichtung,
**dadurch gekennzeichnet, dass** die Unterdruckversorgungseinrichtung (20, 22, 24, 25, 26) auch die Funktion der Kühlungseinrichtung übernimmt.

25. Vorrichtung nach Anspruch 24,
**dadurch gekennzeichnet, dass** die Drehübertragungseinheit (38) zumindest teilweise in einem von der Unterdruckversorgungseinrichtung (20, 22, 24, 25, 26) erzeugten Luftstrom angeordnet ist.

## Claims

1. An apparatus for inspecting, processing and/or conveying articles of the tobacco processing industry, having at least one rotationally driven main body (6), on or in which at least one electrical consumer (14) is arranged, and a transmission device (30) which is coupled to the electrical consumer (14) and comprises a rotational transmission unit (38) having a stationary primary part (38a) and a secondary part (38b) connected to the main body (6), wherein the rotational transmission unit (38) has first energy transmission means (54a, 54b) for supplying energy to the electrical consumer (14) and data signal transmission means (64a, 64b) for transmitting signals to or from the electrical consumer (14),
**characterised in that**
a data signal processing device (68), which is connected to the data signal transmission means (64a, 64b) and coupled to the at least one electrical consumer (14), is provided on or in the main body (6), and the rotational transmission unit (38) comprises second energy transmission means (74a, 74b) for the separate supply of energy to the data signal processing device (68), and
a safety device is provided, which, in a first operating state, prevents a contact of critical and, in particular, health-threatening parts of the apparatus during operation thereof and, in a second operating state, access to these parts during the idling of the apparatus is permitted and configured such that, in its first operating state, it does not influence the function of the first and second energy transmission means (54a, 54b) and the data signal transmission means (64a, 64b), and, in its second operating state, causes a deactivation or switching off of the first energy transmission means (54a, 54b) but continues to have no effect on the function of the second energy transmission means (54a, 54b) and the data signal transmission means (64a, 64b).

2. The apparatus according to claim 1,
**characterised in that**
the transmission device (30) has a stationary first interface unit (32) and a second interface unit (42), which is arranged on or in the main body (6),
the first interface unit (32) is designed for additionally feeding a second electrical supply voltage for separately supplying power to the data signal processing device (68), and the second interface unit (42) is designed for conveying the power obtained via the second power transmission means (74a, 74b) to the data signal processing device (68),
the first interface unit (32) is connected to the primary part (38a) of the rotational transmission unit (38) via an electrical line (34a) and is designed for feeding a first electrical supply voltage for supplying power to the electric consumer (14) into the first power transmission means (54a, 54b), and the second interface unit (42) is designed for conveying the power obtained from the first power transmission means (54a, 54b) to the at least one electric consumer (14), the first interface unit (32) comprises modulation means (62) which convert the data received from the first interface unit (32) and having a specific data format into proprietary signals suitable for transmission via the rotational transmission unit (38), and/or demodulation means which convert proprietary signals obtained from the rotational transmission unit (38) back into data having the specific data format, and
the second interface unit (42) comprises modulation means which convert the data signals received from the second interface unit (42) and having the specific data format into proprietary signals suitable for transmission via the rotational transmission unit (38), and/or demodulation means which convert proprietary signals obtained from the rotational transmission unit (38) back into data signals having the specific data format.

3. The apparatus according to claim 2,
**characterised in that** a data signal processing device (68) which is connected to the data signal transmission means (64a, 64b) and coupled to the at least one electric consumer (14) is provided on or in the main body (6), and for transmission of the data having the specific data format, a data bus is connected to the first interface unit (32) and the same data bus connects the second interface unit (42) to the data signal processing device (68).

4. The apparatus according to claim 2 or 3,
**characterised in that**
the first electrical supply voltage is an AC voltage, the first interface unit (32) has a rectifier (52), which converts the first supply voltage into a DC voltage that is fed to the primary part (38a) of the rotational transmission unit (38) via the electrical line (34a),
inverter means (39) for converting the converted DC voltage into a first AC voltage suitable for transmission to the secondary part (38b) of the rotational transmission unit (38) are provided in the first interface unit (32) or in the primary part (38a) of the rotational transmission unit (38), and
the second interface unit (42) comprises rectifier means (56) which convert the first AC voltage into a first DC output voltage for supplying the at least one electric consumer (14).

5. The apparatus according to claim 4,
**characterised in that** at least one power current rectifier (46), which is interposed between the second interface unit (42) and the at least one electrical consumer (14) and converts the first DC output voltage into a suitable voltage for supplying the at least one electrical consumer (14), is provided on or in the main body (6).

6. The apparatus according to at least one of claims 2 to 5, **characterised in that** the safety device is designed such that, in its second operating state, it brings about a switch-off of the first electrical supply voltage prior to feeding into the first interface unit (32).

7. The apparatus according to at least one of Claims 2 to 6, **characterised in that** the second electrical supply voltage is a DC voltage.

8. The apparatus according to any one of the preceding claims, **characterised in that** the safety device has at least one cover, which is closed in the first operating state and is open in the second operating state, and a monitoring unit, which switches off, or at least deactivates, the first energy transmission means (54a, 54b) when the cover is opened.

9. The apparatus according to claim 8,
**characterised in that** the monitoring unit has a sensor which responds to the opening of the cover and a safety relay.

10. An apparatus for inspecting, processing and/or conveying articles of the tobacco processing industry, having at least one rotationally driven main body (6), on or in which at least one electrical consumer (14) is arranged, and a transmission device (30) which is coupled to the electrical consumer (14) and comprises a rotational transmission unit (38) having a stationary primary part (38a) and a secondary part (38b) connected to the main body (6), wherein the rotational transmission unit (38) has first energy transmission means (54a, 54b) for supplying energy to the electrical consumer (14) and data signal transmission means (64a, 64b) for transmitting signals to or from the electrical consumer (14),
**characterised in that**
the main body (6) is part of a turning drum, a pusher drum, a spreading drum, a rotating cutting device, a testing carousel, or a blade carrier, and a data signal processing device (68), which is connected to the data signal transmission means (64a, 64b) and coupled to the at least one electrical consumer (14), is provided on or in the main body (6), and the rotational transmission unit (38) comprises second energy transmission means (74a, 74b) for the separate supply of energy to the data signal processing device (68).

11. The apparatus according to claim 10,
**characterised in that**
the transmission device (30) has a stationary first interface unit (32) and a second interface unit (42), which is arranged on or in the main body (6),
the first interface unit (32) is designed for additionally feeding a second electrical supply voltage for separately supplying power to the data signal processing device (68), and the second interface unit (42) is designed for conveying the power obtained via the second power transmission means (74a, 74b) to the data signal processing device (68),
the first interface unit (32) is connected to the primary part (38a) of the rotational transmission unit (38) via an electrical line (34a) and is designed for feeding a first electrical supply voltage for supplying power to the electric consumer (14) into the first power transmission means (54a, 54b), and the second interface unit (42) is designed for conveying the power obtained from the first power transmission means (54a, 54b) to the at least one electric consumer (14), the first interface unit (32) comprises modulation means (62) which convert the data received from the first interface unit (32) and having a specific data format into proprietary signals suitable for transmission via the rotational transmission unit (38), and/or demodulation means which convert proprietary signals obtained from the rotational transmission unit (38) back into data having the specific data format, and
the second interface unit (42) comprises modulation means which convert the data signals received from the second interface unit (42) and having the specific data format into proprietary signals suitable for transmission via the rotational transmission unit (38), and/or demodulation means which convert proprietary signals obtained from the rotational transmission unit (38) back into data signals having the specific data format.

12. The apparatus according to claim 11,
**characterised in that** a data signal processing device (68) which is connected to the data signal transmission means (64a, 64b) and coupled to the at least one electric consumer (14) is provided in or on the main body (6), and for transmission of the data having the specific data format, a data bus is connected to the first interface unit (32) and the same data bus connects the second interface unit (42) to the data signal processing device (68).

13. The apparatus according to claim 11 or 12,
**characterised in that**
the first electrical supply voltage is an AC voltage, the first interface unit (32) has a rectifier (52), which converts the first supply voltage into a DC voltage that is fed to the primary part (38a) of the rotational transmission unit (38) via the electrical line (34a),
inverter means (39) for converting the converted DC voltage into a first AC voltage suitable for transmission to the secondary part (38b) of the rotational transmission unit (38) are provided in the first interface unit (32) or in the primary part (38a) of the rotational transmission unit (38), and the second interface unit (42) comprises rectifier means (56) which convert the first AC voltage into a first DC output voltage for supplying the at least one electric consumer (14) .

14. The apparatus according to claim 13,
**characterised in that** at least one power current rectifier (46), which is interposed between the second interface unit (42) and the at least one electrical consumer (14) and converts the first DC output voltage into a suitable voltage for supplying the at least one electrical consumer (14), is provided on or in the main body (6).

15. The apparatus according to at least one of claims 11 to 14, **characterised in that** the second electrical supply voltage is a DC voltage.

16. The apparatus according to at least one of claims 10 to 15, comprising a safety device which, in a first operating state, prevents contact with critical and in particular harmful parts of the apparatus during the operation thereof and, in a second operating state, allows access to these parts during a standstill of the apparatus,
**characterised in that** the safety device is configured such that, in its first operating state, it has no effect on the function of the first and second energy transmission means (54a, 54b) and the data signal transmission means (64a, 64b) and, in its second operating state, it causes the deactivation or shutdown of the first energy transmission means (54a, 54b), but continues to have no effect on the function of the second energy transmission means (54a, 54b) and the data signal transmission means (64a, 64b).

17. The apparatus according to claim 16, **characterised in that** the safety device has at least one cover, which is closed in the first operating state and is open in the second operating state, and a monitoring unit, which switches off, or at least deactivates, the first energy transmission means (54a, 54b) when the cover is opened.

18. The apparatus according to claim 17,
**characterised in that** the monitoring unit has a sensor which responds to the opening of the cover and a safety relay.

19. The apparatus according to at least one of claims 10 or 14 and according to at least one of claims 16 to 18,
**characterised in that** the safety device is designed such that, in its second operating state, it brings about a switch-off of the first electrical supply voltage prior to feeding into the first interface unit (32).

20. The apparatus according to at least one of the preceding claims,
**characterised in that** the rotational transmission unit (38) is designed as a contactless rotational transmission unit.

21. The apparatus according to claim 20,
**characterised in that** the energy transmission means (54a, 54b) operate inductively.

22. The apparatus according to claim 20 or 21,
**characterised in that** the data signal transmission means (64a, 64b) operate capacitively and/or optically.

23. The apparatus according to at least one of the preceding claims, with a cooling device for cooling at least some parts of the apparatus,
**characterised in that** the rotational transmission unit (38) is arranged in the active region of the cooling device.

24. The apparatus according to claim 23, with a vacuum supply device (20, 22, 24, 25, 26) for generating a negative pressure on certain parts or aggregates of the apparatus,
**characterised in that** the vacuum supply device (20, 22, 24, 25, 26) also takes on the function of the cooling device.

25. The apparatus according to claim 24,
**characterised in that** the rotational transmission unit (38) is at least partly arranged in an air stream generated by the negative pressure supply device (20, 22, 24, 25, 26).

## Revendications

1. Dispositif de contrôle, de traitement et/ou de transport d'articles de l'industrie de transformation du tabac, comprenant au moins un corps de base (6) entraîné en rotation, sur lequel ou dans lequel est disposé au moins un consommateur électrique (14), et un dispositif de transmission (30) couplé au consommateur électrique (14), comportant une unité de transmission de rotation (38) dotée d'une partie primaire (38a) fixe et d'une partie secondaire (38b) reliée au corps de base (6), l'unité de transmission de rotation (38) contenant des premiers moyens de transmission d'énergie (54a, 54b) pour l'alimentation en énergie du consommateur électrique (14) et des moyens de transfert de signaux de données (64a, 64b) pour le transfert de signaux vers ou à partir du consommateur électrique (14),
**caractérisé en ce qu'**est prévu sur ou dans le corps de base (6) un dispositif de traitement de signaux de données (68) relié aux moyens de transfert de signaux de données (64a, 64b) et couplé audit au moins un consommateur électrique (14), et **en ce que** l'unité de transmission de rotation (38) contient des seconds moyens de transmission d'énergie (74a, 74b) pour l'alimentation en énergie séparée du dispositif de traitement de signaux de données (68) et
**en ce qu'**il est prévu un dispositif de sécurité qui empêche, dans un premier état de fonctionnement, un contact avec des parties critiques du dispositif et notamment dangereux pour la santé, pendant leur fonctionnement et qui permet, dans un second état de fonctionnement, l'accès à ces parties pendant l'arrêt du dispositif et qui est configuré de façon que, dans son premier état de fonctionnement, il n'intervient pas sur la fonction des premiers et deuxièmes moyens de transfert d'énergie (54a, 54b) et des moyens de transfert de signaux de données (64a, 64b) et qu'il obtient, dans son second état de fonctionnement, une désactivation ou un arrêt des premiers moyens de transfert d'énergie (54a, 54b) mais laisse la fonction des deuxièmes moyens de transfert d'énergie (54a, 54b) et des moyens de transfert de signaux de données (64a, 64b) sans agir là-dessus.

2. Dispositif selon la revendication 1, **caractérisé en ce que**
le dispositif de transmission (30) comprend une première unité d'interface (32) fixe et une seconde unité d'interface (42) disposée sur ou dans le corps de base (6),
la première unité d'interface (32) est conçue pour l'application supplémentaire d'une seconde tension d'alimentation électrique pour l'alimentation en énergie séparée du dispositif de traitement de signaux de données (68) et la seconde unité d'interface (42) est conçue pour la transmission de l'énergie obtenue via les seconds moyens de transmission d'énergie (74a, 74b) au dispositif de traitement de signaux de données (68),
la première unité d'interface (32) est raccordée, via une ligne électrique (34a), à la partie primaire (38a) de l'unité de transmission de rotation (38) et conçue pour injecter une première tension d'alimentation électrique destinée à l'alimentation en énergie du consommateur électrique (14), dans les premiers moyens de transmission d'énergie (54a, 54b), et la seconde unité d'interface (42) est conçue pour transmettre l'énergie obtenue des premiers moyens de transmission d'énergie (54a, 54b) audit au moins un consommateur électrique (14),
la première unité d'interface (32) comprend des moyens de modulation (62) qui convertissent les données reçues de la première unité d'interface (32) et ayant un format de données déterminé en signaux propriétaires aptes à la transmission via l'unité de transmission de rotation (38), et/ou des moyens de démodulation qui retransforment les signaux propriétaires reçus de l'unité de transmission de rotation (38) en données ayant le format de données déterminé, et
la seconde unité d'interface (42) comprend des moyens de modulation qui convertissent les signaux de données reçus de la seconde unité d'interface (42) et ayant le format de données déterminé en signaux propriétaires aptes à la transmission via l'unité de transmission de rotation (38), et/ou des moyens de démodulation qui retransforment les signaux propriétaires reçus de l'unité de transmission de rotation (38) en signaux de données ayant le format de données déterminé.

3. Dispositif selon la revendication 2,
**caractérisé en ce qu'**est prévu, sur ou dans le corps de base (6), un dispositif de traitement de signaux de données (68) raccordé aux moyens de transfert de signaux de données (64a, 64b) et couplé audit au moins un consommateur électrique (14) et **en ce que**, pour le transfert des données ayant le format de données déterminé, un bus de données est relié à la première unité d'interface (32) et le même bus de données relie la seconde unité d'interface (42) au dispositif de traitement de signaux de données (68).

4. Dispositif selon la revendication 2 ou 3,
**caractérisé en ce que**
la première tension d'alimentation électrique est une tension alternative, la première unité d'interface (32) comporte un redresseur (52) qui convertit la première tension d'alimentation en une tension continue qui est appliquée, via la ligne électrique (34a), à la partie primaire (38a) du dispositif de transmission de rotation (38),
dans la première unité d'interface (32) ou dans la partie primaire (38a) de l'unité de transmission de rotation (38) sont prévus des moyens d'onduleur (39) pour la conversion de la tension continue transformée en une première tension alternative apte à la transmission à la partie secondaire (38b) de l'unité de transmission de rotation (38), et
la seconde unité d'interface (42) comporte des moyens de redresseur (56) qui convertissent la première tension alternative en une première tension continue de sortie pour alimenter ledit au moins un consommateur électrique (14).

5. Dispositif selon la revendication 4,
**caractérisé en ce qu'**est prévu sur ou dans le corps de base (6) au moins un convertisseur de puissance (46) qui est monté entre la seconde unité d'interface (42) et ledit au moins un consommateur électrique (14) et convertit la première tension continue de sortie en une tension apte à l'alimentation dudit au moins un consommateur électrique (14).

6. Dispositif selon au moins l'une des revendications 2 à 5,
**caractérisé en ce que** le dispositif de sécurité est conçu de manière à provoquer, dans son second état de fonctionnement, une coupure de la première tension d'alimentation électrique avant injection dans la première unité d'interface (32).

7. Dispositif selon au moins l'une des revendications 2 à 6, **caractérisé en ce que** la seconde tension d'alimentation électrique est une tension continue.

8. Dispositif selon au moins l'une des revendications précédentes, **caractérisé en ce que** le dispositif de sécurité comporte au moins un couvercle qui est fermé dans le premier état de fonctionnement et ouvert dans le second état de fonctionnement et une unité de contrôle qui, lors de l'ouverture du couvercle, met hors circuit ou au moins désactive les premiers moyens de transmission d'énergie (54a, 54b).

9. Dispositif selon la revendication 8, **caractérisé en ce que** l'unité de contrôle comporte un capteur réagissant à l'ouverture du couvercle et un relais de sécurité.

10. Dispositif de contrôle, de traitement et/ou de transport d'articles de l'industrie de transformation du tabac, comprenant au moins un corps de base (6) entraîné en rotation, sur lequel ou dans lequel est disposé au moins un consommateur électrique (14), et un dispositif de transmission (30) couplé au consommateur électrique (14), comportant une unité de transmission de rotation (38) dotée d'une partie primaire (38a) fixe et d'une partie secondaire (38b) reliée au corps de base (6), l'unité de transmission de rotation (38) contenant des premiers moyens de transmission d'énergie (54a, 54b) pour l'alimentation en énergie du consommateur électrique (14) et des moyens de transfert de signaux de données (64a, 64b) pour le transfert de signaux vers ou à partir du consommateur électrique (14),
**caractérisé en ce que** le corps de base (6) est une partie d'un tambour de retournement, d'un tambour poussoir, d'un tambour d'expansion, d'un dispositif de découpe rotatif, d'un carrousel de vérification ou porte-couteau et **en ce qu'**est prévu sur ou dans le corps de base (6) un dispositif de traitement de signaux de données (68) relié aux moyens de transfert de signaux de données (64a, 64b) et couplé audit au moins un consommateur électrique (14), et **en ce que** l'unité de transmission de rotation (38) contient des seconds moyens de transmission d'énergie (74a, 74b) pour l'alimentation en énergie séparée du dispositif de traitement de signaux de données (68).

11. Dispositif selon la revendication 10, **caractérisé en ce que**
le dispositif de transmission (30) comprend une première unité d'interface (32) fixe et une seconde unité d'interface (42) disposée sur ou dans le corps de base (6),
la première unité d'interface (32) est conçue pour l'application supplémentaire d'une seconde tension d'alimentation électrique pour l'alimentation en énergie séparée du dispositif de traitement de signaux de données (68) et la seconde unité d'interface (42) est conçue pour la transmission de l'énergie obtenue via les seconds moyens de transmission d'énergie (74a, 74b) au dispositif de traitement de signaux de données (68),
la première unité d'interface (32) est raccordée, via une ligne électrique (34a), à la partie primaire (38a) de l'unité de transmission de rotation (38) et conçue pour injecter une première tension d'alimentation électrique destinée à l'alimentation en énergie du consommateur électrique (14), dans les premiers moyens de transmission d'énergie (54a, 54b), et la seconde unité d'interface (42) est conçue pour transmettre l'énergie obtenue des premiers moyens de transmission d'énergie (54a, 54b) audit au moins un consommateur électrique (14),
la première unité d'interface (32) comprend des moyens de modulation (62) qui convertissent les données reçues de la première unité d'interface (32) et ayant un format de données déterminé en signaux propriétaires aptes à la transmission via l'unité de transmission de rotation (38), et/ou des moyens de démodulation qui retransforment les signaux propriétaires reçus de l'unité de transmission de rotation (38) en données ayant le format de données déterminé, et
la seconde unité d'interface (42) comprend des moyens de modulation qui convertissent les signaux de données reçus de la seconde unité d'interface (42) et ayant le format de données déterminé en signaux propriétaires aptes à la transmission via l'unité de transmission de rotation (38), et/ou des moyens de démodulation qui retransforment les signaux propriétaires reçus de l'unité de transmission de rotation (38) en signaux de données ayant le format de données déterminé.

12. Dispositif selon la revendication 11,
**caractérisé en ce qu'**est prévu, sur ou dans le corps de base (6), un dispositif de traitement de signaux de données (68) raccordé aux moyens de transfert de signaux de données (64a, 64b) et couplé audit au moins un consommateur électrique (14) et **en ce que**, pour le transfert des données ayant le format de données déterminé, un bus de données est relié à la première unité d'interface (32) et le même bus de données relie la seconde unité d'interface (42) au dispositif de traitement de signaux de données (68).

13. Dispositif selon la revendication 11 ou 12,
**caractérisé en ce que**
la première tension d'alimentation électrique est une tension alternative, la première unité d'interface (32) comporte un redresseur (52) qui convertit la première tension d'alimentation en une tension continue qui est appliquée, via la ligne électrique (34a), à la partie primaire (38a) du dispositif de transmission de rotation (38),
dans la première unité d'interface (32) ou dans la partie primaire (38a) de l'unité de transmission de rotation (38) sont prévus des moyens d'onduleur (39) pour la conversion de la tension continue transformée en une première tension alternative apte à la transmission à la partie secondaire (38b) de l'unité de transmission de rotation (38), et
la seconde unité d'interface (42) comporte des moyens de redresseur (56) qui convertissent la première tension alternative en une première tension continue de sortie pour alimenter ledit au moins un consommateur électrique (14).

14. Dispositif selon la revendication 13,
**caractérisé en ce qu'**est prévu sur ou dans le corps de base (6) au moins un convertisseur de puissance (46) qui est monté entre la seconde unité d'interface (42) et ledit au moins un consommateur électrique (14) et convertit la première tension continue de sortie en une tension apte à l'alimentation dudit au moins un consommateur électrique (14).

15. Dispositif selon au moins l'une des revendications 11 à 14, **caractérisé en ce que** la seconde tension d'alimentation électrique est une tension continue.

16. Dispositif selon au moins l'une des revendications 10 à 15, comprenant un dispositif de sécurité qui, dans un premier état de fonctionnement, empêche un contact avec des composants critiques du dispositif, et notamment dangereux pour la santé, pendant le fonctionnement de celui-ci et, dans un second état de fonctionnement, permet l'accès à ces composants pendant l'arrêt du dispositif,
**caractérisé en ce que** le dispositif de sécurité est conçu de manière à ne pas affecter, dans son premier état de fonctionnement, le fonctionnement des premiers et seconds moyens de transmission d'énergie (54a, 54b) et des moyens de transfert de signaux de données (64a, 64b) et à provoquer, dans son second état de fonctionnement, une désactivation ou mise hors circuit des premiers moyens de transmission d'énergie (54a, 54b), mais à ne pas affecter le fonctionnement des seconds moyens de transmission d'énergie (54a, 54b) et des moyens de transfert de signaux de données (64a, 64b).

17. Dispositif selon la revendication 16, **caractérisé en ce que** le dispositif de sécurité comporte au moins un couvercle qui est fermé dans le premier état de fonctionnement et ouvert dans le second état de fonctionnement et une unité de contrôle qui, lors de l'ouverture du couvercle, met hors circuit ou au moins désactive les premiers moyens de transmission d'énergie (54a, 54b).

18. Dispositif selon la revendication 17, **caractérisé en ce que** l'unité de contrôle comporte un capteur réagissant à l'ouverture du couvercle et un relais de sécurité.

19. Dispositif selon au moins l'une des revendications 10 à 14 et selon au moins l'une des revendications 16 à 18,
**caractérisé en ce que** le dispositif de sécurité est conçu de manière à provoquer, dans son second état de fonctionnement, une coupure de la première tension d'alimentation électrique avant injection dans la première unité d'interface (32).

20. Dispositif selon au moins l'une des revendications précédentes, **caractérisé en ce que** l'unité de transmission de rotation (38) est conçue en tant qu'unité de transmission de rotation sans contact.

21. Dispositif selon la revendication 20,
**caractérisé en ce que** les moyens de transmission d'énergie (54a, 54b) fonctionnent de manière inductive.

22. Dispositif selon la revendication 20 ou 21,
**caractérisé en ce que** les moyens de transmission de signaux de données (64a, 64b) fonctionnent de manière capacitive et/ou optique.

23. Dispositif selon au moins l'une des revendications précédentes, comprenant un dispositif de refroidissement destiné à refroidir au moins quelques composants du dispositif,
**caractérisé en ce que** l'unité de transmission de rotation (38) est disposée dans la zone d'action du dispositif de refroidissement.

24. Dispositif selon la revendication 23, comprenant un dispositif d'alimentation en dépression (20, 22, 24, 25, 26) pour produire une dépression sur certains composants ou ensembles du dispositif,
**caractérisé en ce que** le dispositif d'alimentation en dépression (20, 22, 24, 25, 26) remplit également la fonction du dispositif de refroidissement.

25. Dispositif selon la revendication 24,
**caractérisé en ce que** l'unité de transmission de rotation (38) est disposée, au moins en partie, dans un flux d'air généré par le dispositif d'alimentation en dépression (20, 22, 24, 25, 26).
